Europäisches Patentamt

European Patent Office

Office européen des brevets

(11) Publication number: **0 187 760**
**B1**

(12) **EUROPEAN PATENT SPECIFICATION**

(45) Date of publication of patent specification: **04.07.90**

(51) Int. Cl.⁵: **C 08 L 63/00**

(21) Application number: **85901815.2**

(22) Date of filing: **25.03.85**

(86) International application number:
**PCT/US85/00490**

(87) International publication number:
**WO 86/00630 30.01.86 Gazette 86/03**

(54) COMPOSITIONS OF POLYEPOXIDE/POLYAMINE ADDUCTS AND BLOCKED ISOCYANATES.

(30) Priority: **06.07.84 US 628546**

(43) Date of publication of application:
**23.07.86 Bulletin 86/30**

(45) Publication of the grant of the patent:
**04.07.90 Bulletin 90/27**

(84) Designated Contracting States:
**DE FR GB NL**

(56) References cited:
**US-A-3 321 548**
**US-A-3 922 253**
**US-A-4 134 865**
**US-A-4 134 866**
**US-A-4 296 010**

(73) Proprietor: **THE DOW CHEMICAL COMPANY**
**2030 Dow Center Abbott Road P.O. Box 1967**
**Midland Michigan 48640-1967 (US)**

(72) Inventor: **HICKNER, Richard, A.**
**334 Linden Lane**
**Lake Jackson, TX 77566 (US)**
Inventor: **CAVITT, Michael, B.**
**303 South Yaupon**
**Lake Jackson, TX 77566 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 187 760 B1

**Description**

The present invention concerns specific compositions of polyepoxide/polyamine adducts and blocked polyisocyanates.

DE—A—1,086,372 describes varnishes resistant to chemicals and solvents prepared from a polyamide (the reaction production of a dimer acid and a polyamine) and a trimethylolpropane/toluene diisocyanate prepolymer blocked with a phenol. Cure will take place at room temperature. Addition of an epoxy resin to the above blend results in improved adhesion (German 1,090,803). Flexibility of epoxy resins cured with polyamines at room temperature can be improved by conducting the cure in the presence of a TMP/TDI prepolymer capped with nonylphenol (DE—A—2,152,606).

From US—A—3,321,548 aliphatic and aromatic amine-modified epoxy resins blended with blocked polyisocyanates are known. The coating compositions are especially suitable for insulating electrical conductors. The epoxy resins may be diglydicylethers of bisphenols having an epoxy equivalent of from 400 to 4000. The aromatic polyisocyanates are blocked with polyhydric compounds especially with phenol derivatives.

Phenol-capped isocyanates are not acceptable in the present invention because they react with the amine-capped epoxy at room temperature and, therefore, do not have sufficient stability to formulate a one-package system.

US—A—3,886,228 provides compositions from a polyamine terminated imide and an isocyanate or phenol blocked prepolymer. Again, these are room temperature curing and unacceptable as single-package systems.

Amine terminated polyamide systems stable at room temperature are provided by blocking the isocyanate prepolymer with an alcohol. These systems are cured above (350°F) 177°C (US—A—2,995,531). Mixtures crosslinkable at elevated temperatures are obtained from a trimethylolpropane/toluene diisocyanate prepolymer capped with ε-caprolactam and cured with 3,3'-dimethyl 4,4'-diaminodicyclohexyl methane (DE—A—2,131,299).

Chain extended, substantially linear elastomers prepared from a diamine and a ketoxime blocked diisocyanate are described in CA—A—788,481.

Electrodepositable compositions are described in US—A—4,104,147 and 4,156,226. These are based on intermediate molecular weight amine terminated epoxies cured with blocked isocyanates, but these must be used in aqueous dispersions to provide suitable application viscosity. Amine terminated epoxies capped with an anhydride to give anodic electrodepositable coatings which may be cured with a blocked isocyanate are described in US—A—4,176,221.

Automotive primer-surfacers are typically cured at (275 to 325°F) 135° to 163°C. To be useful, such coatings must cure sufficiently within 15 minutes (900 s) at (275°F) 135°C to give suitable properties. Such a coating must pass a number of tests, one of the most important being a chip resistance test described in Society of Automotive Engineers (SAE) Test Method J400. A chip rating of 6 to 7 is generally acceptable by the automotive companies. Recent environmental pressures have required that newer coatings have a lower volatile content.

It is the object of the invention to provide an improved automotive primer-surfacer composition having a lower volatile content and higher solids and which can be formulated as one package compositions.

This object is attained by an automotive primer surfacer composition which is curable at temperatures above 120°C to 163°C which comprises:

(A) an adduct of

(1) a glycidyl ether of a bisphenol having an average epoxide equivalent weight of from 140—1000 and

(2) a polyamine compound selected from a group consisting of aminoethyl piperazine, ethylenediamine, diethylenetriamine, trimethylenediamine, tetramethylenediamine, pentamethylenediamine, hexamethylenediamine, trimethyl hexamethylenediamine, 1,4-bis(aminoethyl)cyclohexane, 1,4-bis-(aminocyclohexyl) methane, isophorone diamine, and mixtures thereof,

(B) a polyisocyanate selected from a group consisting of toluene diisocyanate, methylenediphenyl diisocyanate, isophorone diisocyanate, methylene bis(cyclohexylmethylisocyanate), hexamethylene diisocyanate, trimethyl hexamethylene diisocyanate, and mixtures thereof, in which NCO groups have been substantially fully blocked characterized in that the NCO-groups are blocked with ketoximes, aldoximes or lactams; wherein components (A—1) and (A—2) are employed in quantities which provide from 0,9 to 20 moles of polyamine compound per epoxide equivalent; and components (A) and (B) are employed in quantities which provide a ratio of latent NCO groups in component (B) per primary and/or secondary amine group in component (A) of from 0,75:1 to 2:1.

The present invention provides coating compositions with higher solids, i.e. non-volatiles content, which are capable of curing within 15 minutes (900 s) at (275°F) 135°C and provides suitable chip resistance.

The components (A—1) and (A—2) are employed in quantities which provide preferably from 0.9 to 10, most preferably from 0.9 to 2 moles of polyamine compound per epoxide equivalent; and components (A) and (B) are employed in quantities which provide a ratio of latent NCO groups in component (B) per primary and/or secondary amine group in component (A) of preferably from 0.9:1 to 1.5:1.

If desired, the excess polyamine can be removed prior to reacting the polyamine-epoxy resin adduct with the blocked isocyanate.

2

A latent NCO group is defined as that which has been rendered inactive, but upon heating will provide a reactive NCO group. The capped isocyanates contain latent NCO groups.

Compositions of the present invention may additionally contain from 10 to 60, preferably from 15 to 50, percent by weight based on the total composition of a suitable solvent.

Suitable epoxy resins which are employed herein include the glycidyl ethers of bisphenols.

Suitable, for example, are the glycidyl ethers of bisphenol A, an adduct of bisphenol A with four moles of ethylene or propylene oxide or glycidyl ethers of hydrogenated bisphenol A or mixtures thereof.

Suitable amine materials which can be employed herein to prepare the amine terminated adducts with the epoxy resins include aminoethyl piperazine, ethylenediamine, diethylenetriamine, trimethylenediamine, tetramethylenediamine, pentamethylenediamine, hexamethylenediamine, trimethyl hexamethylenediamine, 1,4-bis(aminomethyl)cyclohexane, 1,4-bis(aminocyclohexyl)methane, isophorone diamine, or mixtures thereof.

The ratio of the amine component to the epoxy may vary over a wide range. The moles of amine to equivalents of epoxy can vary from 0.9 to 20 moles of amine to equivalents of epoxy. At the lower ratio of amine to epoxy some molecular weight build-up will occur. At the higher ratio of amine to epoxy molecular weight build-up will be minimized, however, large quantities of unreacted amine will be present. Although the excess amine may be removed, for example by distillation, it is preferable to use a lower ratio of amine to epoxy. A ratio of about 2 moles of polyamine per equivalent of epoxy will provide minimum molecular weight build-up while minimizing the amount of unreacted amine.

Suitable polyisocyanates which can be employed herein include aliphatic, cycloaliphatic or aromatic polyisocyanates which have an average of more than one —NCO group per molecule.

Particularly suitable polyisocyanates include toluene diisocyanate, methylenediphenyl diisocyanate, isophorone diisocyanate, methylene bis(cyclohexylmethylisocyanate), hexamethylene diisocyanate, trimethyl hexamethylene diisocyanate, and mixtures thereof.

Also suitable as polyisocyanates are the isoocyanate prepolymers prepared from the aforementioned polyisocyanates and a polyhydric material such as, for example, aliphatic diols, polyoxyalkylene diols, aliphatic triols and polyoxyalkylene triols. Particularly suitable polyhydric materials which can be employed to prepare the prepolymers include, for example, polyalkylene diols such as polypropylene or polybutylene glycols having a molecular weight from 200 to 2000, polyesters such as, for example, poly(propylene glycol) adipate, polycaprolactonediols or triols, and mixtures thereof.

Suitable ketoximes which can be employed herein as the capping or blocking agent for the polyisocyanate include, for example, acetone ketoxime, methyl ethyl ketoxime, cyclohexanoneoxime, and mixtures thereof.

Suitable aldoximes which can be employed herein to prepare the capped or blocked polyisocyanate include, for example, acetaldoxime, propionaldoxime, and mixtures thereof.

Suitable lactams which can be employed as the capping or blocking agent for the polyisocyanates include, for example, ε-caprolactam, 2-pyrrolidine, and mixtures thereof.

When it is desired for the capped or blocked polyisocyanate to be deblocked at temperatures of from (250° to 325°F) 120° to 163°C, it is to employ an aldoxime, ketoxime or lactam as the capping or blocking agent.

Suitable solvents which can be employed herein include, for example, glycol ethers, ketones, esters, aromatic hydrocarbons, and mixtures thereof.

The curable compositions of the present invention is employed as automotive primer surfacers.

If desired, one or more additives such as, for example, fillers, pigments, dyes, or flow control agents can be added to the curable and/or coating compositions of the present invention.

The following examples are illustrative of the present invention but are not to be construed as to limiting the scope thereof in any manner.

### Examples 1 through 13

Preparation of Polyepoxide/Polyamine Adducts

For Adduct A, a 500 ml flask was charged with 31.76 g (0.25 mole) of 2-aminoethylpiperazine (AEP molecular weight 129) and 25 g of 2-methoxypropanol. A solution of 100 g (0.22 eq.) of a diglycidyl ether of bisphenol A having an average epoxide equivalent weight (EEW) of 450 in 100 g of 2-methoxypropanol was added during 90 minutes (5400 s) while maintaining the temperature at 30°C. The solution was stirred an additional 4.5 hours (16200 s) at room temperature. The product was a pale yellow liquid having a Gardner viscosity of Y-, approximately (160 cps) 1.6Pa·s, at 51 percent solids at room temperature. For Adducts B through G, the method for preparing Adduct A was followed using epoxy resins which were diglycidyl ethers of bisphenol A having EEWs of 450, 238 and 186, and using as amines 2-aminoethylpiperazine and diethylenetriamine (DETA, molecular weight 103). For Adducts E, F and G, a 250 ml flask was employed instead of a 500 ml flask. A summary of the adducts is given in Table I.

## TABLE I

| | Amine Solution | | | | | Epoxy Resin | | Moles Amine Equiv. Epoxy Resins | Final Solids % | Viscosity | | |
|---|---|---|---|---|---|---|---|---|---|---|---|---|
| Adduct | Amine | g | mole | Solvent, g | EEW | g | equiv. | | | Gardener | (cps) | Pa·s |
| A | AEP | 31.76 | 0.25 | 25 | 450 | 100 | 0.22 | 1.1:1 | 51 | Y | (1600) | 1.6 |
| B | DETA | 50.4 | 0.49 | 33.6 | 450 | 200 | 0.44 | 1.1:1 | 60 | N.D. | | |
| C | AEP | 119.2 | 0.92 | 79.0 | 238 | 200 | 0.84 | 1.1:1 | 60 | Z-2-1 | (2500) | 2.5 |
| D | DETA | 95.2 | 0.92 | 63.5 | 238 | 200 | 0.84 | 1.1:1 | 60 | Z-2 | (3600) | 3.6 |
| E | DETA | 80.1 | 0.77 | 36.0 | 186 | 128.9 | 0.70 | 1.1:1 | 70 | N.D. | | |
| F | DETA | 154.2 | 1.49 | 36.0 | 186 | 55.9 | 0.30 | 5.0:1 | 70 | N.D. | | |
| G | DETA | 177.9 | 1.72 | 36.0 | 186 | 31.95 | 0.17 | 10.1:1 | 70 | N.D. | | |

N.D. - Not determined.

Example 1 was prepared by mixing 11.3 g (0.02 equiv.) with 5.3 g (0.02 equiv.) of Blocked Isocyanate H, an aliphatic/aromatic, ketoxime blocked polyisocyanate commercially available from Mobay Chemical Co. as Mondur® HCB. Example 2 was prepared by mixing a like amount of Adduct A with 3.1 g (0.02 equiv.) of Blocked Isocyanate I. Blocked Isocyanate I was prepared by reacting 0.2 equiv. of a polyoxypropylene glycol having an average molecular weight of 400 and 0.8 equiv. of 2-ethylhexanol with 1.0 equiv. of 80/20 2,4-/2,6-toluene diisocyanate mixture. Films of the two examples were drawn down on Bonderite 40 treated steel panes using a No. 22 wire wound and cured at (350°F) 177°C for 15 minutes (900 s).

Blocked Isocyanate J was prepared as follows: A 500 ml flask was charged with 336 g (1.0 equiv.) of an adduct of trimethylolpropane (TMP) and an 80/20 mixture of 2,4-/2,6-toluene diisocyanate (TDI) commercially available from Spencer-Kellog as P49—75S (75% solids in ethyl acetate). Methyl ethyl ketoxime (87.1 g, 1.0 mole, 1.0 equiv.) was added dropwise during 40 minutes (2400 s) while applying cooling as required to keep the temperature below 60°C. Forty g of methyl ethyl ketone were added, and stirring was continued an additional 90 minutes (5400 s). An additional 80 g of methyl ethyl ketone and 20 g of 2-methoxypropanol were added, giving a final product at 60.2 percent solids and containing 14.9 percent ethyl acetate, 21.3 percent methyl ethyl ketone and 3.6 percent 2-methoxypropanol. This product had a latent NCO equivalent weight of 563 and a Gardner viscosity of X. Latent NCO equivalent weight means the weight which would provide one NCO equivalent upon removal of the blocking agent.

Blocked Isocyanate K was prepared as follows: A one-liter flask was charged with 174 g (2.0 equiv.) of TDI. The contents were heated to 50°C and 205 g (1.0 equiv.) of a polypropylene glycol of about 425 molecular weight commercially available from The Dow Chemical Company as P425 containing 0.87 g of dibutyltin dilaurate (20 percent solids in methyl ether ketone) was added during 30 minutes (1800 s) while maintaining the temperature below 70°C with occasional cooling. Fifty ml of methyl ethyl ketone were added, stirring continued for an additional 40 minutes (2400 s) at 55°C. Heating was discontinued and 87.1 g of methyl ethyl ketoxime (1.0 mole, 1.0 equiv.) were added while applying cooling to keep the temperature below 55°C. An additional 25 ml of methyl ethyl ketone and 25 g of 2-methoxypropanol were added to give a total of 100 g of solvent added or 82.3 percent solids. The product had a latent NCO equivalent weight of 566 and a Gardner viscosity of Z.

The product gradually crystallized on prolonged standing but could be liquefied by heating to between 40 and 60°C.

Examples 3 through 6 were prepared using Adducts A, B, C and D and Blocked Isocyanate J. Examples 7 through 13 were prepared using Adducts A through G and Blocked Isocyanate K.

The compositions of Examples 1 through 13 were employed to prepare cured films. The films were drawn down on Bonderite 40 treated steel panels using a No. 22 wire wound rod. Films from Examples 1 and 2 were cured at (350°F) 177°C for 15 minutes (900 s). Films from Examples 3 through 10 were cured at (275°F) 135°C or (325°F) 163°C for 30 minutes (1800 s). Films from Examples 11 through 13 were cured at (300°F) 149°C for 15 minutes (900 s).

Summaries of the compositions and the methyl ethyl ketone (MEK) rubs and reverse impact are presented in Table II.

TABLE II

| | Example 1 | Example 2 | Example 3 | Example 4 | Example 5 |
|---|---|---|---|---|---|
| **Blocked Isocyanate** g, equiv. NCO | H/5.3/0.02 | I/3.1/0.02 | J/17.0/0.03 | J/17.0/0.03 | J/17.0/0.03 |
| **Polyepoxide/Polyamine Adduct** | A/11.3/0.02 | A/11.3/0.02 | A/34.7/0.036 | B/27.7/0.035 | C/18.3/0.03 |
| **Latent NCO/** Pri. Amine Group | 1:1 | 1:1 | 0.8:1 | 0.9:1 | 1:1 |
| **Cure at (350°F) 177°C** MEK Double Rubs Reverse Impact, (in-lb) J | >100 (50) 5.7 | >100 (>160) > 18.1 | N.D. | N.D. | N.D. |
| **Cure at (325°F) 163°C** MEK Double Rubs Reverse Impact, (in-lb) J | N.D. | N.D. | >100 (F40) F4.5 | >100 (F40) F4.5 | >100 (F40) F4.5 |
| **Cure at (300°F) 149°C** MEK Double Rubs Reverse Impact, (in-lb) J | N.D. | N.D. | N.D. | N.D. | N.D. |
| **Cure at (275°F) 135°C** MEK Double Rubs Reverse Impact, (in-lb) J | N.D. | N.D. | >100 (F40) F4.5 | >100 (F40) F4.5 | >100 (F40) F4.5 |

## TABLE II (cont.)

|  | Example 6 | Example 7 | Example 8 | Example 9 | Example 10 |
|---|---|---|---|---|---|
| Blocked Isocyanate g, equiv. NCO | J/17.0/0.03 | K/17.0/0.03 | K/17.0/0.03 | K/17.0/0.03 | K/17.0/0.03 |
| Polyepoxide/Polyamine Adduct | D/17.0/0.035 | A/34.7/0.036 | B/27.7/0.035 | C/18.3/0.03 | D/17.0/0.035 |
| Latent NCO/ Pri. Amine Group | 0.9:1 | 0.08:1 | 0.9:1 | 1:1 | 0.9:1 |
| Cure at (350°F) 177°C MEK Double Rubs Reverse Impact, (in-lb) J | N.D. | N.D. | N.D. | N.D. | N.D. |
| Cure at (325°F) 163°C MEK Double Rubs Reverse Impact, (in-lb) J | >100 (F40) F4.5 | >100 (F40) F4.5 | >100 (P140) P15.8 | >100 (F120) F13.6 | >100 (F60) F6.8 |
| Cure at (300°F) 149°C MEK Double Rubs Reverse Impact, (in-lb) J | N.D. | N.D. | N.D. | N.D. | N.D. |
| Cure at (275°F) 135°C MEK Double Rubs Reverse Impact, (in-lb) J | >100 (F40) F4.5 | >100 (F40) F4.5 | >100 (P140) P15.8 | >100 (F120) F13.6 | >100 (P140) P15.8 |

TABLE II (cont.)

| | Example 11 | Example 12 | Example 13 |
|---|---|---|---|
| Blocked Isocyanate g, equiv. NCO | K/55.8/0.1 | K/55.8/0.1 | K/55.8/0.1 |
| Polyepoxide/Polyamine Adduct | E/23.8/0.07 | F/6.7/0.06 | G/5.8/0.063 |
| Latent NCO/ Pri. Amine Group | 1.4:1 | 1.7:1 | 1.6:1 |
| Cure at (350°F) 177°C MEK Double Rubs Reverse Impact, (in-lb) J | N.D. | N.D. | N.D. |
| Cure at (325°F) 163°C MEK Double Rubs Reverse Impact, (in-lb) (J) | N.D. | N.D. | N.D. |
| Cure at (300°F) 149°C MEK Double Rubs Reverse Impact, (in-lb) J | >200 (P160) P18.1 | 47 (P160) P18.1 | 69 (P160) P18.1 |
| Cure at (275°F) 135°C MEK Double Rubs Reverse Impact, (in-lb) J | N.D. | N.D. | N.D. |

EP 0 187 760 B1

# EP 0 187 760 B1

## Claims

1. An automotive primer surfacer composition which is curable at temperatures above 120°C to 163°C which comprises:

(A) an adduct of

(1) a glycidyl ether of a bisphenol having an average epoxide equivalent weight of from 140—1000 and

(2) a polyamine compound selected from a group consisting of aminoethyl piperazine, ethylenediamine, diethylenetriamine, trimethylenediamine, tetramethylenediamine, pentamethylenediamine, hexamethylenediamine, trimethyl hexamethylenediamine, 1,4-bis(aminomethyl)cyclohexane, 1,4-bis(aminocyclohexyl) methane, isophorone diamine, and mixtures thereof,

(B) a polyisocyanate selected from a group consisting of toluene diisocyanate, methylenediphenyl diisocyanate, isophorone diisocyanate, methylene bis(cyclohexylmethylisocyanate), hexamethylene diisocyanate, trimethyl hexamethylene diisocyanate, and mixtures thereof, in which NCO groups have been substantially fully blocked characterized in that the NCO-groups are blocked with ketoximes, aldoximes or lactams; wherein components (A—1) and (A—2) are employed in quantities which provide from 0,9 to 20 moles of polyamine compound per epoxide equivalent; and components (A) and (B) are employed in quantities which provide a ratio of latent NCO groups in component (B) per primary and/or secondary amine group in component (A) of from 0,75:1 to 2:1.

2. A composition of Claim 1 wherein components (A—1) and (A—2) are employed in quantities which provide from 0.9 to 10 moles of polyamine compound per epoxide equivalent; and components (A) and (B) are employed in quantities which provide a ratio of latent NCO groups in component (B) per primary and/or secondary amine group in component (A) of from 0.9:1 to 1.5:1.

3. The composition of Claim 1 additionally containing from 10 to 60 percent by weight based on the total composition of a suitable solvent.

4. The composition of Claim 3 wherein the solvent is present in quantities of from 15 to 50 percent by weight.

## Revendications

1. Composition de revêtement de surface du type primaire pour automobiles, pouvant durcir à des températures situées entre 120°C et 163°C et comportant:

(A) un produit d'addition de

(1) éther glycidylique d'un bisphénol d'un poids en équivalent époxyde moyen entre 140 et 1000 et

(2) un composé de polyamine choisi dans un groupe constitué des composés suivants, aminoéthylpipérazine, éthylènediamine, diéthylènetriamine, triméthylènediamine, tétraméthylènediamine, pentaméthylènediamine, hexaméthylènediamine, triméthylhexaméthylènediamine, 1,4-bis(aminométhyl)cyclohexane, 1,4-bis(aminocyclohexyl) méthane, isophoronediamine et leurs mélanges,

(B) un polyisocyanate chois dans un groupe constitué des composés suivants, toluènediisocyanate, méthylènediphényldiisocyanate, isophoronediisocyanate, méthylène bis(cyclohexylméthylisocyanate) héxaméthylènediisocyanate, triméthylhexaméthylènediisocyanate et leurs mélanges, dans lesquels les groupes NCO ont été sensiblement complètement bloqués, caractérisé en ce que les groupes NCO sont bloqués par des cétoximes, des aldoximes ou des lactames; les composants (A—1) et (A—2) étant employés dans des quantités qui donnent de 0,9 à 20 moles de composés polyamine par équivalent époxyde; et que les composants (A) et (B) sont employés dans des quantités qui donnent un rapport des groupes NCO latents dans le composant (B) par groupe amine primaire et/ou secondaire dans le composant (A) allant de 0,75:1 à 2:1.

2. Composition selon la revendication 1 dans laquelle les composants (A—1) et (A—2) sont employés dans des quantités qui donnent de 0,9 à 10 moles de composé polyamine par équivalent époxyde; et dans laquelle les composants (A) et (B) sont employés dans des quantités qui donnent un rapport des groupes NCO latents dans le composant (B) par groupe amine primaire et/ou secondaire dans le composant (A) de 0,9:1 à 1,5:1.

3. Composition selon la revendication 1 contenant en outre de 10 à 60% en poids, sur la base de la composition totale, d'un solvant convenable.

4. Composition selon la revendication 3 dans laquelle le solvant est présent dans des quantités de 15 à 50% en poids.

## Patentansprüche

1. Grundspachtelmasse für Automobile, die bei Temperaturen über 120°C bis 163°C härtbar ist, enthaltend:

(A) ein Addukt von

(1) einem Glycidylether eines Bisphenols mit einem mittleren Epoxidäquivalentgewicht von 140—1000 und

(2) einer Polyaminverbindung, ausgewählt aus der aus Aminoethylpiperazin, Ethylendiamin, Diethylentriamin, Trimethylendiamin, Tetramethylendiamin, Pentamethylendiamin, Hexamethylendiamin,

9

Trimethylhexamethylendiamin, 1,4-Bis(aminomethyl)cyclohexan, 1,4-Bis(aminocyclohexyl)methan, Isophorondiamin und Mischungen derselben bestehenden Gruppe.

(B) ein Polyisocyanat, ausgewählt aus der aus Toluoldiisocyanat, Methylendiphenyldiisocyanat, Isophorondiisocyanat, Methylen Bis(cyclohexylmethylisocyanat), Hexamethylendiisocyanat, Trimethylhexamethylendiisocyanat und Mischungen derselben bestehenden Gruppe, wobei die NCO-Gruppen im wesentlichen vollständig verkappt sind, dadurch gekennzeichnet, daß die NCO Gruppen mit Ketoximen, Aldoximen oder Lactamen verkappt sind, die Bestandteile (A—1) und (A—2) in Mengen verwendet werden, die von 0,9—20 Mole Polyaminverbindung pro Epoxidäquivalent ergeben, und Bestandteile (A) und (B) in Mengen verwendet werden, die ein Verhältnis von latenten NCO-Gruppen in Bestandteil (B) pro primärer und/oder sekundärer Amingruppe in Bestandteil (A) von 0,75:1 bis 2:1 ergeben.

2. Zusammensetzung nach Anspruch 1, dadurch gekennzeichnet, daß die Bestandteile (A—1) und (A—2) in Mengen verwendet werden, die von 0,9 bis 10 Mole Polyaminverbindung pro Epoxidäquivalent ergeben, und Bestandteile (A) und (B) in Mengen verwendet werden, die ein Verhältnis von latenten NCO-Gruppen in Bestandteil (B) pro primärer und/oder sekundärer Amingruppe in Bestandteil (A) von 0,9:1 bis 1,5:1 ergeben.

3. Zusammensetzung nach Anspruch 1, dadurch gekennzeichnet, daß sie zusätzlich von 10—60 Gewichtsprozent, bezogen auf Gesamtzusammensetzung, eines geeigneten Lösungsmittels enthält.

4. Zusammensetzung nach Anspruch 3, dadurch gekennzeichnet, daß das Lösungmittel in Mengen von 15—50 Gewichtsprozent vorhanden ist.